# EUROPEAN PATENT APPLICATION

(11) **EP 3 162 508 A1**
(43) Date of publication of application: **03.05.2017**
(21) Application number: 16197806.9
(22) Date of filing: 19.10.2015
(51) Int. Cl.: B25B 23/10, B25B 23/12

(54) **MAGNETIC LEVITATION SCREW-CLAMPING JAW FOR AUTOMATIC SCREWDRIVERS**

(62) Divisional of application: 15190407.5
(71) Applicant: Mijy-Land Industrial Co., Ltd., Taipei Shian (TW)
(72) Inventor: HSU, Hsiu-Lin, LW Jou City (TW)
(74) Representative: Hellmich, Wolfgang

(57) **Abstract**

A magnetic levitation screw-clamping jaw for automatic screwdrivers. The main feature is a configuration of a magnetic levitation clamping jaw on the front end of the screwdriver bit of an automatic screwdriver. The structure and working principle of the invention include: (1) through pneumatic control, clamp the screw at air intake, and through electromagnetic control, release the screw at air exhaust, meanwhile complete the locking action straightforward with the automatic screwdriver; and with electric power input, the electromagnet can absorb the screw; (2) through the relative displacement with the automatic screwdriver, push the magnet, and as like poles repel, the repulsion force will push the displacement to clamp the screw to immediately conduct the locking action; (3) through the relative displacement with the automatic screwdriver, push the switch to control the magnet excitation of the magnetic chuck to absorb and clamp the screw for the screw-locking action.

## Description

### BACKGROUND OF INVENTION

### 1. Field of the Invention

The present invention relates generally to screw-locking technology used in robots (or robotic arms), and more particularly to a magnetic levitation screw-clamping jaw for automatic screwdrivers which is more convenient, more accurate and more effective.

### 2. Description of Related Art

Nowadays, automatic screwdrivers are commonly used in robots or robotic arms for screw-locking operations. In an automatic screw-locking operation, the screwdriver bit on the front end of the automatic screwdriver is aligned to the screw clamped from the screw aligner (or screw storage trough) on the robot or robotic arm and then the screw is locked and fixed.

To cater to various types of operation, manufacturers have constantly developed various products to meet specific needs; for example, prior-art domestic Patent Publication No. M343563 "screw supplying device" disclosed a screw supplying device to combine with an automatic screwdriver, which comprises a screw supply trough and a swing arm. Through magnetism, the swing arm absorbs a screw supplied one by one by the screw supply trough, swings and aligns to the position right below the screwdriver bit of the automatic screwdriver; when the automatic screwdriver presses from below, the screwdriver bit and the screw will be combined for locking.

For a second example, prior-art domestic Patent Publication No. 187918 "an improved automatic screwdriver head structure" disclosed a sleeve head structure to combine with an automatic screwdriver supporting head, which comprises a sleeve head shaft, an elastic component, and a sleeve. It main feature is arrangement of a sleeve sheathed on the front bolt end of the detachable sleeve head shaft, and an elastic component fixed between the sleeve and the sleeve head shaft; by using the inner diameter of the sleeve to trap and fix the nut of the screw to be picked up, and turning the bolt head to contact and lay into the turning slot on the nut, the screw can be vertically clamped at once, accurately and stably.

For the above screw-clamping methods using air-blowing, air suction or elasticity, operators generally adopt middle or low torsion for the operating standards of automatic tools. The maximum torsion is rarely used as the maximum allowance, because using the maximum torsion will reduce the lifecycle of the automatic tools. Hence, such designs can not meet the condition of actual applications. Actual allowance may often be larger than the reference allowance set out in the contents of descriptions. Therefore, occasionally, when locking screws on airplanes, automobiles or other products, such situations as screw slippage or loose locking may occur, which may consequently leading to accidents; moreover, such chucks used to clamp screws are usually over-sized, and due to the problem of the chuck size, the convenience of screw-locking operation is often affected by the limited space.

In addition, the existing modules and peripheral devices commonly used in screw-locking operations by robots and automatic screwdrivers include: robot, coupling shaft (device), tool, external control tube, screw buffer mechanism, screw aligner (to pick up the screw), screw fixing mechanism (to clamp the screw) etc. The structural design of such existing robots and automatic screwdrivers can only be applied in traditional automatic equipment of three axes or less. Besides, in the past, there were no robot-dedicated pneumatic screwdrivers. Hence, before the screw-locking operation, at least 7 devices mentioned above shall be integrated to automatically complete the screw-locking action. Because the overall equipment uses too many modules, the manufacturing cost is greatly increased.

Secondly, in case of different sizes of screws to be locked, it is necessary to use screw fixers of matching sizes. However, as there are many different specifications of screws, if it is necessary to change a matching screw feeder every time when changing to a different screw size, the cost will be very high.

Furthermore, for general productions and precise productions, either when locking big screws (6mm or more) of large torsions or when locking small screws (5mm or less) of small torsions, the integrated operations will surely cause large allowances, particularly in the case of locking screws of 1mm or less in precise 3C productions. Such productions still rely on human labor, and due to the high cost of labor, massive production is not feasible.

### SUMMARY OF THE INVENTION

The main objective of the present invention is to provide a magnetic levitation screw-clamping jaw for automatic screwdrivers used in assembly operations requiring high accuracy, and to further develop low-cost peripheral (locking) modules for automatic screwdrivers specifically used in robots. Thus, the production cost of peripheral equipment for locking screws can be reduced, and robots can easily, quickly and conveniently complete continuous and automatic screw-locking operations. This will greatly reduce production costs.

The second objective of the present invention is to provide a magnetic levitation screw-clamping jaw for automatic screwdrivers, which is capable of clamping operations through magnets pushed by a pneumatic controller or dual functions of magnetic absorption and clamping controlled by a pneumatic controller. The invention provides a sufficient range of screw diameters for clamping, so that it can clamp screws of various sizes without the need to change the clamping tool. Hence, it provides great convenience in practical applications; meanwhile, as the clamping operation is fulfilled through interaction of pneumatic control and magnetic absorption, the appearance of the screws will not be damaged during the clamping operations. Also, with a special design of the appearance and size of the chuck, the invention can be effectively applied even in small spaces.

To achieve the above objectives, the present invention adopts a technical solution (one) that includes: configuration of a magnetic levitation clamping jaw on the front end of the screwdriver bit of an automatic screwdriver, the construction of the magnetic levitation clamping jaw at least comprising: an intake control point connected to external pneumatic supply to provide high-pressure gas input; an exhaust control point communicated with the intake control point to provide high-pressure gas output; a pneumatic cylinder assembly to provide a telescopic action to limit the air exhaust of the exhaust control point; a pair of corresponding first magnets, which will move closer to each other when pressed by the high-pressure gas input from the intake control point, and be reset under the elasticity of the spring when the high-pressure gas is exhausted from the exhaust control point; a pair of corresponding second magnets, configured at a position adjacent to the first magnets and magnetically attracted by the first magnets, so as to have displacement in the same direction as the first magnets; a clamping jaw, bonded with the second magnets and able to have displacement along a fixed rail; and a set of claws, bonded with the clamping jaw, able to form a tightened or released condition when the clamping jaw moves close to or away from the screwdriver bit so as to clamp or release the screw.

Said exhaust control point further includes an electromagnet to control the gas exhaust.

Said claws are optimally four-fingered.

Said electromagnet further includes an electric power input so that the claws have magnetic attraction to absorb and clamp the screw.

When an automatic screwdriver is combined with a robotic arm for screw-locking operations, the magnetic levitation clamping jaw configured on the front end of the screwdriver bit of the automatic screwdriver can enable the robotic arm to smoothly clamp the screw, and immediately conduct the screw-locking operation after clamping the screw. Thus, continuous screw clamping and locking operations can be realized, and consequently, the efficiency of production requiring accurate screw-locking operations can be greatly enhanced.

The present invention adopts a technical solution (two) that includes: configuration of a magnetic levitation clamping jaw on the front end of the screwdriver bit of an automatic screwdriver, the construction of the magnetic levitation clamping jaw at least comprising: a first magnet, configured on the periphery of the screwdriver bit, which will have synchronous displacement when the outer shell is pressed down to provide a magnetic repulsion force, and be reset when the outer shell is released; a second magnet, configured between the first magnet and the screwdriver bit without contacting each other, which will be pushed closer to the screwdriver bit along with the displacement of the first magnet under the repulsion force as like poles repel, and be reset when the screwdriver bit has locked the screw; and a chuck, bonded with the second magnet to have a magnetic attraction force, and which will form a tightened or released condition along with the displacement of the second magnet, so as to magnetically clamp and release the screw.

Said second magnet and the chuck can be an integrated structure.

The present invention adopts a technical solution (three) that includes: configuration of a magnetic levitation clamping jaw on the front end of the screwdriver bit of an automatic screwdriver, the construction of the magnetic levitation clamping jaw at least comprising: a switch, configured on the periphery of the screwdriver bit, which will be switched on when the outer shell is pressed down to cause a displacement and contact, and switched off when the outer shell is reset; a battery, electrically connected with the switch, which meanwhile provides an electric power signal; and a magnetic chuck, configured between the switch, battery and screwdriver bit, having a hollow space for arrangement of the screwdriver bit going through, using its exposed end to clamp the screw. A coil is wound around the periphery of the magnetic chuck, the coil being electrically connected with the switch and battery; Based on the above design, the magnetic condition of the chuck can be switched on or off to magnetically absorb and clamp the screw.

The present invention specially designed a module dedicated to robots (or robotic arms ), which, through pneumatic and electric control systems, during the screw-locking operation, signals can be transmitted to the host of the robot for control, and the systems can be connected to a central host computer for data storage. Transmission of the signals is stable, and the quality can be maintained at a high level. Other benefits include:
1. The number of dedicated peripheral modules for an automatic screwdriver used in a robot can be reduced from originally at least 7 to only 3, so that the robot can easily complete the screw-locking operation, and the cost can be dramatically reduced by more than 3 times.
2. The magnetic levitation clamping jaw provides a wide range of screw head diameters for clamping, avoiding the conventional troubles to change the chuck structure and operation for different screw specifications. Meanwhile, it can avoid damage of the appearance of the screw during the clamping operation.

### BRIEF DESCRIPTION OF THE DRAWINGS

FIG. 1 is a structural view of the first preferred embodiment of the present invention of a magnetic levitation clamping jaw;
FIG. 2 is a working view of the first preferred embodiment of the present invention of a magnetic levitation clamping jaw;
FIG. 2 (A) is a partially enlarged side view of FIG. 2.
FIG. 3 is a structural view of the second preferred embodiment of the present invention of a magnetic levitation clamping jaw;
FIG. 4 is a working view of the second preferred embodiment of the present invention of a magnetic levitation clamping jaw;
FIG. 5 is a structural view of the third preferred embodiment of the present invention of a magnetic levitation clamping jaw;
FIG. 6 is a working view of the third preferred embodiment of the present invention of a magnetic levitation clamping jaw;

### DETAILED DESCRIPTION OF THE INVENTION

The present invention provides a magnetic levitation screw-clamping jaw for automatic screwdrivers, mainly features a configuration of a magnetic levitation clamping jaw 20 on the front end of the screwdriver bit 10 of an automatic screwdriver 1.

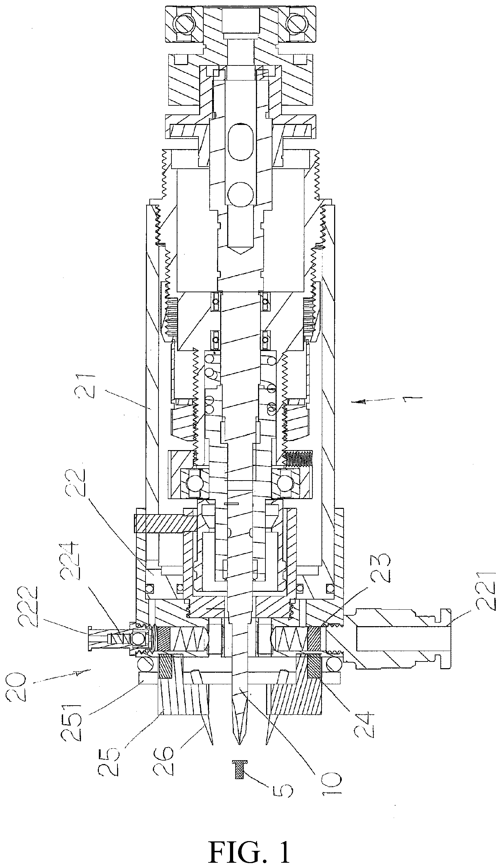

FIG. 1 depicts the construction of the first preferred embodiment of the magnetic levitation clamping jaw; wherein, the magnetic levitation clamping jaw 20 is configured on the front end of the screwdriver bit 10 of an automatic screwdriver 1, and the tail end of the automatic screwdriver 1 is actually combined with a robot (robotic arm) for application; as shown in the drawing, through an outer shell base 21, the magnetic levitation clamping jaw 20 is smoothly bonded with and covering the screwdriver bit 10 of the automatic screwdriver 1 for subsequent locking operations; the constitution of the magnetic levitation clamping jaw 20 at least includes: an intake control point 221 connected with external pneumatic supply to provide high-pressure gas input; an exhaust control point 222 communicated with the intake control point 221 to provide high-pressure gas output, said exhaust control point 222 can further include an electromagnet 224; a pneumatic cylinder assembly 22 to provide a telescopic action to limit the air exhaust of the exhaust control point 222; a pair of corresponding first magnet 23, which will move closer to each other when pressed by the high-pressure gas input from the intake control point 221, and be reset under the elasticity of the spring 223 when the high-pressure gas is exhausted from the exhaust control point 222; a pair of corresponding second magnets 24, configured at a position adjacent to the first magnets 23, and magnetically attracted by the first magnets 23, so as to have synchronous and same-direction displacement, and be synchronously and inversely reset when the first magnet 23 is inversely reset; a clamping jaw 25, bonded with the second magnets 24 and able to have displacement along a fixed rail 251; and a set of claws 26, bonded with the clamping jaw 25 and arranged in an inclined fashion, able to form a tightened or released condition when the clamping jaw 25 moves close to or away from the screwdriver bit 10, so as to clamp or release the screw.

Referring to FIG. 1 (A), the number of claws 26 can be implemented as a pair or an even multiple. The present embodiment uses four claws to obtain optimal clamping stability.

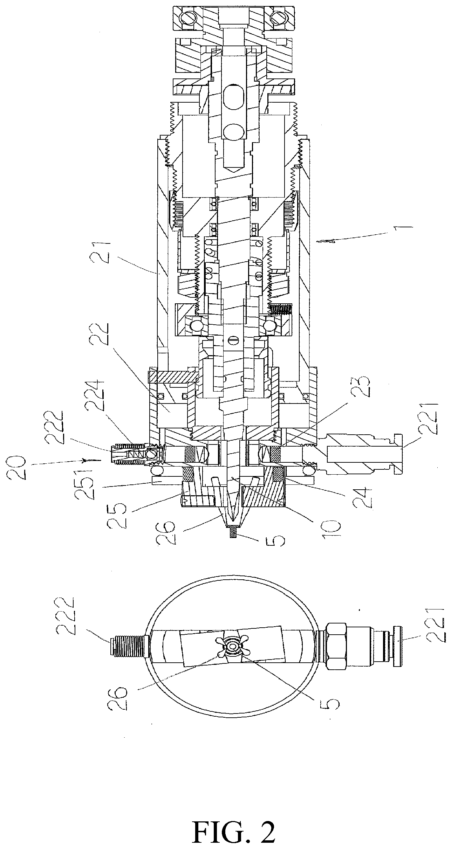

Based on said structure of the magnetic levitation clamping jaw, the operating situation is depicted in FIG. 2. Firstly, through an external pneumatic supply, high-pressure gas is input from the intake control point 221 to the magnetic clamping jaw 20, meanwhile, the pneumatic cylinder assembly 22 will act to stretch out the pneumatic cylinder to block the exhaust control point 222, to prevent the high-pressure gas from leaking out; now, the gas pressure of the high-pressure gas will push the corresponding first magnets 23 to move close to each other, and through magnetism, during the displacement, the corresponding first magnets 23 will attract the neighboring second magnets 24 to move close to each other. As the second magnets 24 are bonded with the clamping jaw 25, the clamping jaw 25 will move along the fixed rail 251 toward the screwdriver bit 10. When reaching the final position, all tips of the set of claws 26 will form a tightened condition to successfully clamp the screw 5.

Based on the above design, in actual screw clamping, as the magnetic levitation clamping jaw 20 is pushed by the pressure of external input high-pressure gas to clamp the screw 5, the force to clamp the screw 5 is buffered and balanced, and will not damage the appearance of the screw head.

After clamping the screw 5, the screwdriver bit 10 is pushed by a preset and constant pushing force so that its tip will contact and hold the screw head for successful locking; meanwhile, the exhaust control point 222 will start air exhaust through the control of the electromagnet 224. Now, the first magnets 23 will move in the inverse direction under the elasticity of the spring 223 because there is no more gas pressure. During the displacement, the first magnets 23 will attract the neighboring second magnets 24 to have synchronous and inverse displacement, and meanwhile the second magnets 24 will cause the clamping jaw 25 to go along the fixed rail 251 and away from the screwdriver bit 10, so that the claws 26 will be reset to the released (standby) condition.

Hence, in implementation, when it is needed to combine an automatic screwdriver 1 with a robotic arm to fulfill screw-locking operations, the magnetic levitation clamping jaw 20 bonded on the front end of the screwdriver bit 10 of the automatic screwdriver 1 can enable the robotic arm to quickly and smoothly clamp the screw 5, and immediately conduct the locking action after clamping the screw 5. Thus, continuous and automatic screw clamping and locking actions can be realized to enhance productivity in precise screw-locking operations.

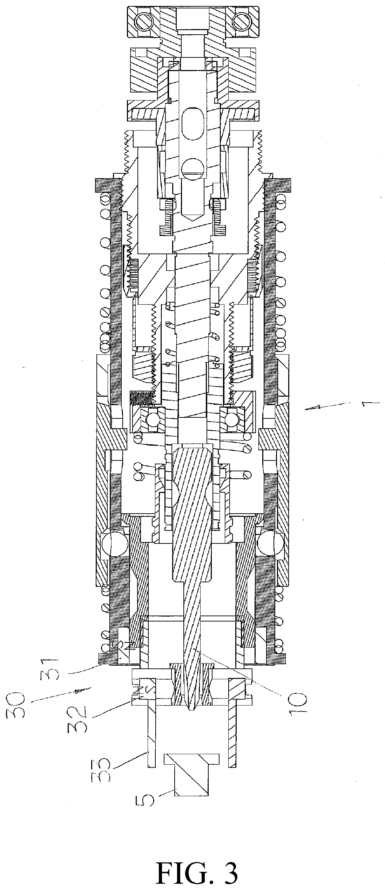

Furthermore, FIG. 3 depicted a second preferred embodiment of the structure of the magnetic levitation clamping jaw; wherein, the magnetic levitation clamping jaw 30, bonded on the screwdriver bit 10 of the automatic screwdriver 1, at least includes: a first magnet 31, configured on the periphery of the screwdriver bit 10, which will have synchronous displacement when the outer shell is pressed down to provide a magnetic repulsion force, and be reset when the outer shell is released; a second magnet 32, configured between the first magnet 31 and the screwdriver bit 10 without contacting each other, which will be pushed closer to the screwdriver bit 10 along with the displacement of the first magnet 31 under the repulsion force as like poles repel, and be reset when the screwdriver bit 10 has locked the screw 5; and a chuck 33, bonded with the second magnet 32 to have a magnetic attraction force, and which will form a tightened or released condition along with the displacement of the second magnet 32, so as to magnetically clamp and release the screw 5 for convenient locking operations.

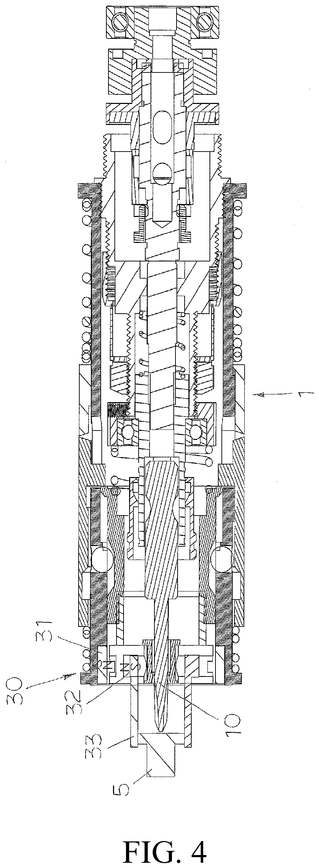

In implementation of the above design, when the automatic screwdriver 1 and robot (or robotic arm) are combined together for screw-locking operations, the working principle is as depicted in FIG. 4, when the outer shell is pressed down and the magnetic levitation clamping jaw 30 has a displacement, this section of stroke simultaneously includes: causing the first magnet 31 of the magnetic levitation clamping jaw 30 to move to the position adjacent to the second magnet 32, and to push the second magnet 32 to enable the chuck 33 to absorb and clamp the screw 5; when the screwdriver bit 10 moves downward to contact and hold the screw 5 for locking, it will push apart and release the second magnet 32, and meanwhile reset the outer shell, and also reset the first magnet 31 of the magnetic levitation clamping jaw 30, so that the screwdriver bit 10 can stretch out to tightly push the screw 5 to complete the locking.

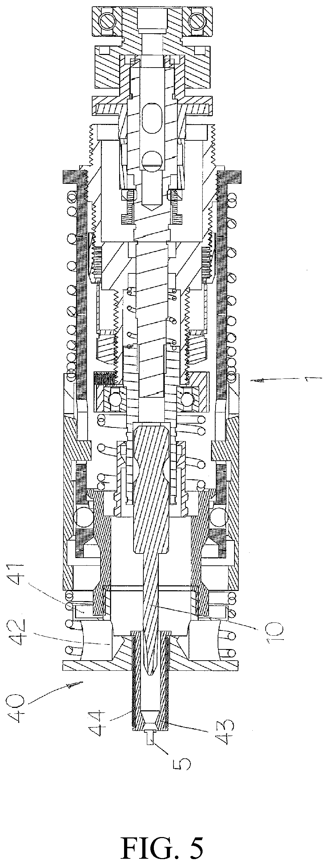

Further referring to FIG. 5, a third preferred embodiment of the structure of the magnetic levitation clamping jaw is depicted; wherein, the magnetic levitation clamping jaw 40 at least includes: a switch 41, configured on the periphery of the screwdriver bit 10, having a PCB board to transmit received signals to an external control circuit, which will be contacted and switched on when the outer shell is pressed down to cause a displacement, and be released and switched off when the outer shell is reset; a battery 42, electrically connected with the switch 41, which meanwhile provides an electric power signal; and a magnetic chuck 43, configured between the switch 41, battery 42 and screwdriver bit 10, having a hollow space for arrangement of the screwdriver bit 10 going through, using its exposed end to clamp the screw 5. A coil 44 is wound around the periphery of the magnetic chuck 43, the coil 44 being electrically connected with the switch 41 and battery 42. Based on this, by controlling the switch 41, the magnetic condition of the magnetic chuck 43 can be switched on or off to magnetically absorb and clamp the screw 5.

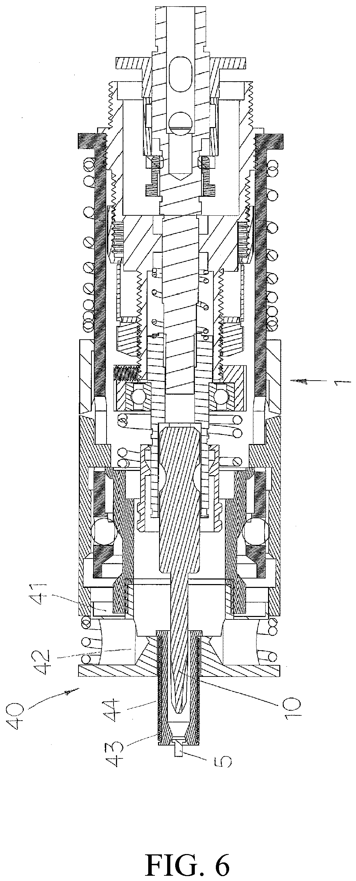

In implementation of the above design, when the automatic screwdriver 1 and robot (or robotic arm) are combined together for screw-locking operations, the working principle is as depicted in FIG. 6, when the magnetic levitation clamping jaw 30 is pressed down to have a downward displacement, this section of stroke simultaneously includes: causing the first magnet 31 of the magnetic levitation clamping jaw 30 to move close to the second magnet 32, and cause the chuck 33 to release absorption of the screw 5; and continuous displacement of the first magnet 31 away from the second magnet 32, to tighten the chuck 33 to clamp the screw 5; releasing the magnetic levitation clamping jaw 30 to reset, stretching out the screwdriver bit 10 of the automatic screwdriver 1 to tightly pushing the screw 5 for the subsequent locking operation.

To summarize, to meet the need for precise assembly by big manufacturers, the present invention developed a low-cost peripheral module for automatic screwdrivers dedicated to robots (or robotic arms), wherein the magnetic levitation clamping jaw is capable of screw-clamping operations or dual functions of magnetic absorption and clamping through a pneumatic controller to input high-pressure gas to push magnetic attraction or repulsion, and releasing the screw during gas exhaust through the control of an electromagnet. After clamping the screw, the automatic screwdriver can directly conduct the locking action. Such a method is different from the traditional or current automatic assembly equipment of 3 axes or less, and can substantially reduce the number of peripheral modules to cut production cost. Also, in implementation, the present invention is capable of locking screws of various sizes. It is truly a good solution to meet the need of the coming Industry 4.0 era.

The embodiments described above are based on the following feature analysis:
A 1^{st} magnetic levitation screw-clamping jaw (25) for automatic screwdrivers, featuring a configuration of a magnetic levitation clamping jaw (20, 30, 40) on the front end of the screwdriver bit (10) of an automatic screwdriver, said magnetic levitation clamping jaw (20, 30, 40) at least comprises:
   an intake control point (221) connected with external pneumatic supply to provide high-pressure gas input;
   an exhaust control point (222) communicated with the intake control point (221) to provide high-pressure gas output;
   a pneumatic cylinder assembly (22) to provide a telescopic action to limit the air exhaust of the exhaust control point (222);
   a pair of corresponding first magnets, which will move closer to each other when pressed by the high-pressure gas input from the intake control point (221), and be reset under the elasticity of the spring (223) when the high-pressure gas is exhausted from the exhaust control point (222);
   a pair of corresponding second magnets (24), configured at a position adjacent to the first magnets and magnetically attracted by the first magnets, so as to have displacement in the same direction as the first magnets;
   a clamping jaw (25), bonded with the second magnets and able to have displacement along a fixed rail (251); and
   a set of claws (26), bonded with the clamping jaw (25), able to form a tightened or released condition when the clamping jaw (25) moves close to or away from the screwdriver bit (10), so as to clamp or release the screw.
A 2^{nd} magnetic levitation screw-clamping jaw (25) as the 1^{st} magnetic levitation screw-clamping jaw (25), wherein said exhaust control point (222) further includes an electromagnet (224).
A 3^{rd} Magnetic levitation screw-clamping jaw (25) as the 1^{st} or 2^{nd} magnetic levitation screw-clamping jaw (25), wherein said claws (26) are optimally four-fingered.
A 4^{th} Magnetic levitation screw-clamping jaw (25) as the 2^{nd} or 3^{rd} magnetic levitation screw-clamping jaw (25), wherein said electromagnet (224) further includes an electric power input so that the claws (26) have magnetic attraction to absorb and clamp the screw.
A 5^{th} magnetic levitation screw-clamping jaw (25) for automatic screwdrivers, featuring a configuration of a magnetic levitation clamping jaw (20, 30, 40) on the front end of the screwdriver bit (10) of an automatic screwdriver, said magnetic levitation clamping jaw (20, 30, 40) at least comprises:
   a first magnet (31), configured on the periphery of the screwdriver bit (10), which will have synchronous displacement when the outer shell is pressed down to provide a magnetic repulsion force, and be reset when the outer shell is released;
   a second magnet (32), configured between the first magnet (31) and the screwdriver bit (10) without contacting each other, which will be pushed closer to the screwdriver bit (10) along with the displacement of the first magnet (31) under the repulsion force as like poles repel, and be reset when the screwdriver bit (10) has locked the screw; and
   a chuck (33), bonded with the second magnet (32) to have a magnetic attraction force, and which will form a tightened or released condition along with the displacement of the second magnet (32), so as to magnetically clamp and release the screw.
A 6^{th} magnetic levitation screw-clamping jaw (25) as the 5^{th} magnetic levitation screw-clamping jaw (25), wherein the second magnet (32) and the chuck (33) can be an integrated structure.
A 7^{th} magnetic levitation screw-clamping jaw (25) for automatic screwdrivers, featuring a configuration of a magnetic levitation clamping jaw (20, 30, 40) on the front end of the screwdriver bit (10) of an automatic screwdriver, said magnetic levitation clamping jaw (20, 30, 40) at least comprises:
   a switch (41), configured on the periphery of the screwdriver bit (10), having a PCB board to transmit received signals to an external control circuit, which will be contacted and switched on when the outer shell is pressed down to cause a displacement and contact, and be released and switched off when the outer shell is reset;
   a battery (42), electrically connected with the switch, which meanwhile provides an electric power signal; and
   a magnetic chuck (43), configured between the switch, battery (42) and screwdriver bit (10), having a hollow space for arrangement of the screwdriver bit (10) going through, using its exposed end to clamp the screw; a coil (44) is wound around the periphery of the magnetic chuck (43), the coil (44) being electrically connected with the switch (41) and battery (42);
   based on the above design, the magnetic condition of the chuck (33) can be switched on or off to magnetically absorb and clamp the screw.

## Claims

1. Magnetic levitation screw-clamping jaw (25) for automatic screwdrivers, featuring a configuration of a magnetic levitation clamping jaw (40) on the front end of the screwdriver bit (10) of an automatic screwdriver, said magnetic levitation clamping jaw (40) at least comprises:
a switch (41), configured on the periphery of the screwdriver bit (10), having a PCB board to transmit received signals to an external control circuit, which will be contacted and switched on when the outer shell is pressed down to cause a displacement and contact, and be released and switched off when the outer shell is reset;
a battery (42), electrically connected with the switch, which meanwhile provides an electric power signal; and
a magnetic chuck (43), configured between the switch, battery (42) and screwdriver bit (10), having a hollow space for arrangement of the screwdriver bit (10) going through, using its exposed end to clamp the screw; a coil (44) is wound around the periphery of the magnetic chuck (43), the coil (44) being electrically connected with the switch (41) and battery (42);
based on the above design, the magnetic condition of the chuck (33) can be switched on or off to magnetically absorb and clamp the screw.
